# FASCICULE DE BREVET EUROPEEN

(11) **EP 1 241 491 B1**
(45) Date de publication et mention de la délivrance du brevet: **12.11.2008**
(21) Numéro de dépôt: 02290420.5
(22) Date de dépôt: 21.02.2002
(51) Int. Cl.: G02B 6/02, H01S 3/067

(54) **Fibre optique photonique à double gaine**
Photonische optische Faser mit doppeltem Mantel
Photonic optical fibre with double cladding

(30) Priorité: 16.03.2001 FR 0103640
(43) Date de publication de la demande: 18.09.2002
(73) Titulaire: Alcatel Lucent, 75008 Paris (FR)
(72) Inventeur: Bayart, Dominique, 92140 Clamart (FR); Berthelot, Laurent, 91400 Orsay (FR)
(74) Mandataire: Korakis-Ménager, Sophie

(56) Documents cités:
- EP-A- 0 905 834
- EP-A- 1 043 816
- PATENT ABSTRACTS OF JAPAN vol. 2000, no. 05, 14 septembre 2000 (2000-09-14) -& JP 2000 035521 A (NIPPON TELEGR &TELEPH CORP <NTT>), 2 février 2000 (2000-02-02)
- SONDERGAARD T: "PHOTONIC CRYSTAL DISTRIBUTED FEEDBACK FIBER LASERS WITH BRAGG GRATINGS" JOURNAL OF LIGHTWAVE TECHNOLOGY, IEEE. NEW YORK, US, vol. 18, no. 4, avril 2000 (2000-04), pages 589-597, XP000989283 ISSN: 0733-8724
- WADSWORTH ET.AL.: "Yb3+-doped photonic crystal fibre laser" ELECTRONICS LETTERS., vol. 36, no. 17, 17 août 2000 (2000-08-17), pages 1452-1454, XP006015581 IEE STEVENAGE., GB ISSN: 0013-5194
- CREGAN R F ET AL: "DISTRIBUTION OF SPONTANEOUS EMISSION FROM AN ER3+-DOPED PHOTONIC CRYSTAL FIBER" JOURNAL OF LIGHTWAVE TECHNOLOGY, IEEE. NEW YORK, US, vol. 17, no. 11, novembre 1999 (1999-11), pages 2138-2141, XP001033280 ISSN: 0733-8724

## Description

La présente invention concerne le domaine des transmissions par fibre optique, et plus spécifiquement, les fibres optiques photoniques à double gaine utilisée pour l'amplification optique des signaux.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent. Les variations de l'indice selon le profil permettent de contrôler la propagation de la lumière le long de la fibre.

Sont apparues récemment des fibres dites "photoniques", appelées aussi en langue anglaise "photonic crystal fibres" (PCF): ces fibres ne sont pas, comme les fibres classiques, entièrement constituées d'un matériau solide transparent comme la silice dopée; en section, une fibre photonique présente une pluralité de trous d'air. Ces trous sont parallèles à l'axe de la fibre, et s'étendent longitudinalement le long de la fibre. Pratiquement, ces trous peuvent être obtenus en fabriquant la préforme par assemblage de tubes capillaires ou de cylindres de silice, en respectant le motif des trous à obtenir dans la fibre. L'étirage d'une telle préforme fournit une fibre avec des trous correspondant aux tubes capillaires.

La présence de ces trous dans le matériau de la fibre crée des variations d'indice moyen du matériau; ces variations de l'indice peuvent, comme dans une fibre optique classique, être utilisées pour le guidage de signaux lumineux à des longueurs d'onde adaptées. Une description de telles fibres photoniques est fournie dans WO-A-00 49 435 : ce document, outre le principe de fonctionnement des fibres photoniques, décrit un procédé permettant l'assemblage de telles fibres, en faisant varier longitudinalement le diamètre des trous. Le profil d'indice des fibres n'est pas précisé; la demande mentionne que les variations du diamètre de mode provoquées par les variations longitudinales des dimensions des trous peuvent être utilisées dans ces amplificateurs optiques.

R.F. Cregan et autres, Distribution of Spontaneous Emission from an Er3-Doped Photonic Crystal Fiber, Journal of Lightwave Technology, vol. 17 no. 11, Novembre 1999, étudie l'émission spontanée dans une fibre photonique. Les trous d'air sont répartis suivant une matrice triangulaire, la fibre présentant une forme hexagonale; au centre de l'hexagone, la fibre ne présente pas de trou, et la silice est dopée à l'erbium. Ce document étudie la distribution spatiale de l'émission spontanée lors du pompage axial de la fibre; il montre que la distribution est fonction de la répartition des trous dans la fibre, en accord avec la simulation. Il n'est fait aucune référence à une utilisation de la fibre dopée.

Thomas Sondergaard, Photonic Crystal Distributed Feedback Fiber Lasers with Bragg Gratings, Journal of Lightwave Technology, vol. 18 no. 4, Avril 2000, discute de l'utilisation de fibres photoniques pour réaliser des lasers à fibres; il précise que les surfaces de mode pour le signal ou pour la pompe peuvent être plus réduites ou plus importantes que les surfaces de mode correspondantes de fibres à saut d'indice classiques. L'utilisation de fibres photoniques permet donc de réaliser des lasers à fibres à faible seuil de pompage - dans le cas de faibles surfaces de mode - ou de réaliser des lasers à forte puissance - dans le cas de fortes surfaces de mode. Ce document ne fait état que de simulations numériques, à l'exclusion de toute réalisation pratique.

W.J. Wadsworth et autres, Yb3+-doped photonic crystal fibre laser, Electronics Letters, vol. 36 no. 17, Août 2000, met en évidence expérimentalement un effet laser dans une fibre photonique; la fibre est constituée en entourant de capillaires en silice pure un tube de silice dopée à l'Yb et codopé à l'Al; l'ensemble est ensuite étiré pour former une fibre, autour de laquelle on dispose un manchon en silice pure. Deux rangées de trous entourent le coeur dopé et la lumière est fortement confinée dans le coeur dopé de la fibre.

EP-A-1 043 816 décrit une fibre à double gaine; le signal est transmis dans le coeur dopé de la fibre et une pompe est injectée dans la première gaine; la deuxième gaine a pour effet de confiner la lumière de la pompe dans la première gaine. Pour diriger la lumière de la pompe vers le coeur dopé, il est proposé de prévoir dans la première gaine des régions d'indice modifié. Ces régions d'indice modifié peuvent notamment être constituées de trous d'air. Dans un mode de réalisation sont prévus trois régions d'indice modifié, répartis sur la périphérie de la première gaine. Dans un autre mode de réalisation sont prévues six régions d'indice modifié, formant les sommets et les milieux des côtés d'un triangle équilatéral. Il est suggéré que les régions d'indice modifié doivent être disposées aussi loin que possible du coeur de la fibre, afin d'éviter de modifier la polarisation dans le coeur de la fibre.

EP-0 905 834 décrit une fibre à double gaine ayant un coeur dopé aux terres rares ne comportant pas de trous.

Le problème de l'invention est l'amélioration de l'efficacité des amplificateurs optiques à double gaine, par rapport à la solution proposée dans EP-A-1 043 816. L'invention propose donc, dans un mode de réalisation, une répartition des trous dans une fibre photonique à double gaine, non seulement dans la première gaine, mais aussi dans le coeur de la fibre.

Plus précisément, l'invention propose une fibre optique à cristal photonique à double gaine, présentant
- un coeur de fibre, une première gaine entourant le coeur de fibre et une deuxième gaine entourant la première gaine,
- au moins un trou dans le coeur de fibre s'étendant longitudinalement le long de la fibre, et
- un dopage avec un ion de terre rare, au moins dans le coeur de fibre.

Dans un mode de réalisation, la fibre présente une pluralité de trous dans le coeur et dans la première gaine.

De préférence, le diamètre de mode d'un signal injecté dans le coeur de fibre est supérieur au diamètre du coeur.

Le dopage peut s'étendre dans un disque, ou encore dans une couronne. Dans ce cas, la couronne recouvre de préférence l'interface entre le coeur de fibre et la première gaine.

Les trous peuvent être disposés sur une matrice de points triangulaire; on peut ne pas prévoir de trou en l'axe de la fibre. On peut aussi prévoir que les trous présentent une dimension croissante en s'éloignant de l'axe de la fibre.

L'invention propose aussi un amplificateur comprenant une telle fibre et un laser à fibre comprenant une telle fibre. L'amplificateur et le laser comprennent au moins une pompe injectée dans la première gaine.

D'autres caractéristiques et avantages de l'invention apparaîtront à la lecture de la description qui suit de modes de réalisation de l'invention, donnés à titre d'exemple et en référence aux dessins annexés, qui montrent
- figure 1, une représentation schématique de la section d'une fibre optique photonique selon un mode de réalisation de l'invention;
- figure 2, une représentation du profil d'indice de consigne de la fibre de la figure 1,
- figure 3, une représentation de l'intensité du signal sur un rayon de la fibre de la figure 1;
- figures 4 à 15, des figures similaires aux figures 1 à 3, pour d'autres fibres.

L'invention propose, dans une fibre à double gaine, de prévoir des trous non seulement dans la première gaine, mais aussi dans le coeur de la fibre; elle permet ainsi d'améliorer le recouvrement entre le signal et la pompe. La solution proposée par l'invention va à l'encontre de l'enseignement du document EP-A-1 043 816, dans lequel il est proposé de disposer les trous à l'extérieur de la gaine. La solution proposée dans ce document a pour objectif de renvoyer vers le coeur de fibre les rayons de la lumière de pompe se propageant au voisinage de l'interface entre la première gaine et la seconde gaine. Au contraire, la solution proposée dans l'invention repose sur un effet technique complètement différent : les trous dans la gaine comme dans le coeur ont pour effet d'augmenter le diamètre de mode du signal et le recouvrement entre le signal et la pompe.

Les trous dans la fibre se trouvent au moins dans le coeur de la fibre; la présence de trous a pour effet d'augmenter le diamètre de mode du signal injecté dans le coeur de la fibre; de la sorte, on améliore le recouvrement entre le signal et une pompe injectée dans la gaine.

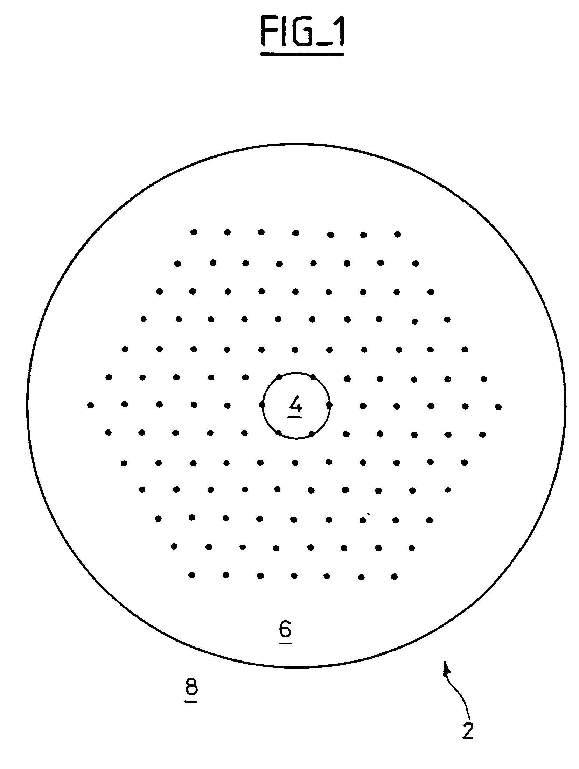

La figure 1 montre une représentation schématique de la section d'une fibre optique photonique selon un mode de réalisation de l'invention; dans cet exemple, la fibre 2 présente un coeur de fibre 4, une première gaine 6 entourant le coeur de fibre et une deuxième gaine 8 entourant la première gaine; la limite extérieure de cette deuxième gaine n'est pas représentée sur la figure. Ces différentes parties de la fibre sont définies de façon connue en soi, par la différence d'indice entre le coeur et la première gaine, d'une part, et par la différence d'inde entre la première gaine et la deuxième gaine d'autre part. On reconnaît donc le coeur de fibre comme la partie de la fibre qui s'étend au centre de la fibre, et qui est limitée par l'interface avec la première gaine, soit par une chute d'indice sur le profil d'indice. De même, la première gaine est la partie de la fibre qui à l'extérieur de cette première interface et jusqu'à une deuxième interface avec la deuxième gaine, c'est-à-dire jusqu'à une deuxième chute d'indice sur le profil d'indice.

La fibre de la figure 1 est dopée par au moins un ion de terre rare, présentant un numéro atomique entre 57 et 71. On peut notamment utiliser l'erbium, l'ytterbium, le germanium ou les autres éléments bien connus en tant que tels pour leur utilisation dans des amplificateurs optiques. On peut aussi prévoir un codopage par d'autres dopants, tels l'aluminium le phosphore ou encore le cérium; ces éléments peuvent servir à faire varier les indices respectifs du coeur, induire des modifications spectrales du gain ou du taux de désexcitation non-radiatif. Une proportion d'erbium de l'ordre de 1000 ppm en masse est adaptée pour une utilisation de la fibre comme amplificateur dopé à l'erbium; un codopage à l'ytterbium peut être prévu, avec des proportions d'ytterbium de 5000 à 20000 ppm en masse. Pour une utilisation de la fibre comme laser, on peut aussi utiliser un dopage avec de l'ytterbium seul, dans une proportion qui peut être voisine de 2000 ppm. Les longueurs d'onde de pompage sont typiquement de l'ordre de 970 à 985 nm en cas de dopage à l'erbium et voisines de 915 nm pour un dopage à l'ytterbium.

Le lieu du dopage aux terres rares dans la fibre peut varier en fonction des modes de réalisation; il est possible de doper seulement le coeur de la fibre; toutefois, dans la mesure où la présence des trous dans la fibre a pour effet d'augmenter le diamètre de mode du signal au-delà du coeur de fibre, il peut être avantageux que le dopage s'étende aussi au moins partiellement dans la première gaine; ceci permet d'améliorer le rendement d'amplification dans la fibre. On peut encore doper la fibre dans une couronne, s'étendant partiellement sur la partie extérieure du coeur monomode, et dans la partie de la première gaine voisine du coeur monomode. La couronne recouvre alors avantageusement l'interface entre le coeur monomode et la première gaine.

La figure montre aussi que la fibre est une fibre photonique, c'est-à-dire présente des trous s'étendant longitudinalement. On prévoit au moins un trou dans la fibre, et de préférence plus d'un trou. Les trous sont disposés au moins en partie dans le coeur de la fibre, et ont pour effet d'augmenter le diamètre de mode du signal injecté dans le coeur de fibre. Dans l'exemple de la figure 1, comme dans les autres exemples, les trous sont disposés sur les points d'une matrice triangulaire; le terme "matrice" qualifie l'ensemble des lieux possibles des trous dans la fibre photonique; dans la mesure où la préforme de la fibre est formée par assemblage de tubes capillaires et de cylindres pleins, cette "matrice" est définie par la disposition des tubes et des cylindres dans la préforme. Dans l'exemple d'une matrice triangulaire, les tubes et cylindres sont disposés en rangées, deux rangées adjacentes étant décalées d'une distance correspondant à la distance entre deux tubes ou cylindres adjacents dans la rangée. D'autres formes de matrice sont possibles - par exemple une matrice carrée. Dans tous les cas, la matrice est formée d'un ensemble de points, en lesquels il est possible le cas échéant de prévoir un trou.

Dans l'exemple de la figure 1, les trous sont disposés dans la matrice triangulaire, suivant un hexagone; au centre de la fibre, il n'est pas prévu de trou. La distribution des trous dans la fibre peut varier par rapport à cet exemple.

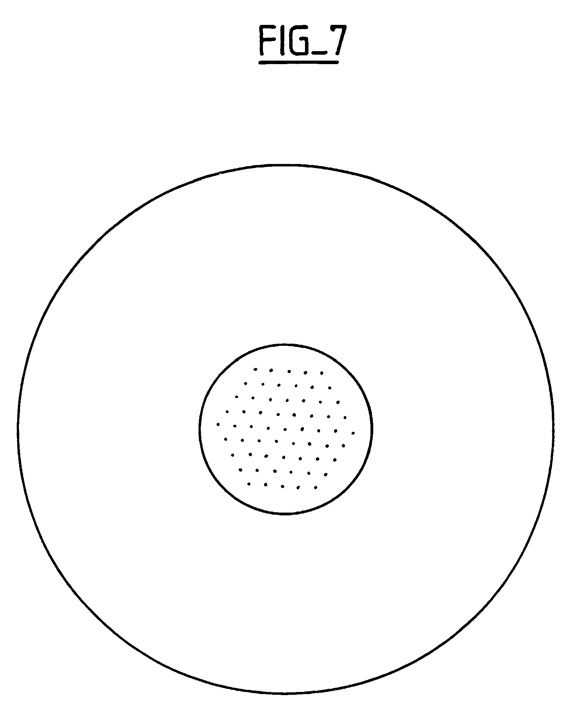

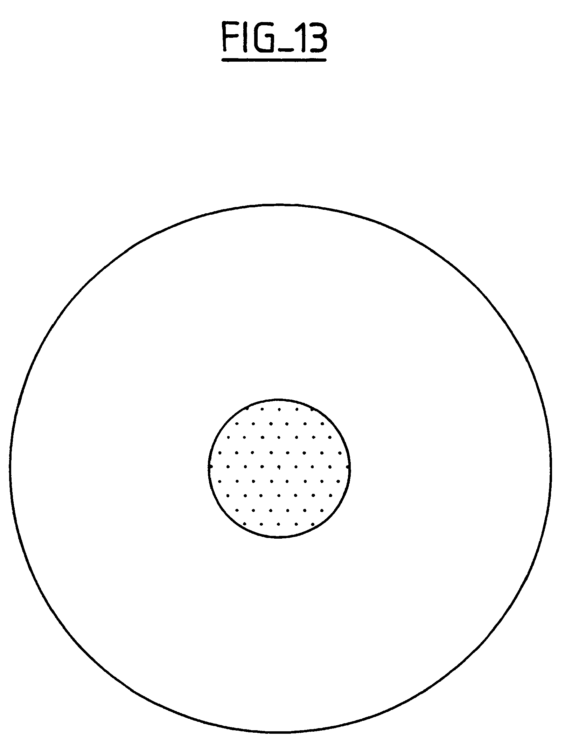

Les trous peuvent s'étendre uniquement dans le coeur de la fibre, comme dans les exemples des figures 7 et 13. Ils permettent ainsi d'augmenter le diamètre du coeur tout en restant monomode pour le signal, ce qui permet alors d'augmenter le diamètre de mode. Autrement dit, avec un fort diamètre de coeur, la fibre ne serait pas nécessairement monomode en l'absence de trous. La présence des trous permet de converser un comportement monomode, même pour de forts rayons de coeur. L'augmentation du diamètre de mode, en même temps que le diamètre du coeur monomode, améliore le recouvrement.

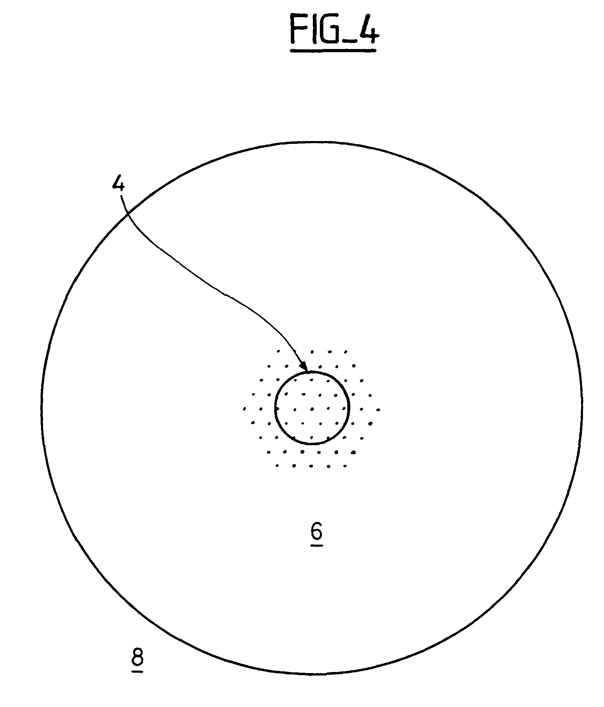

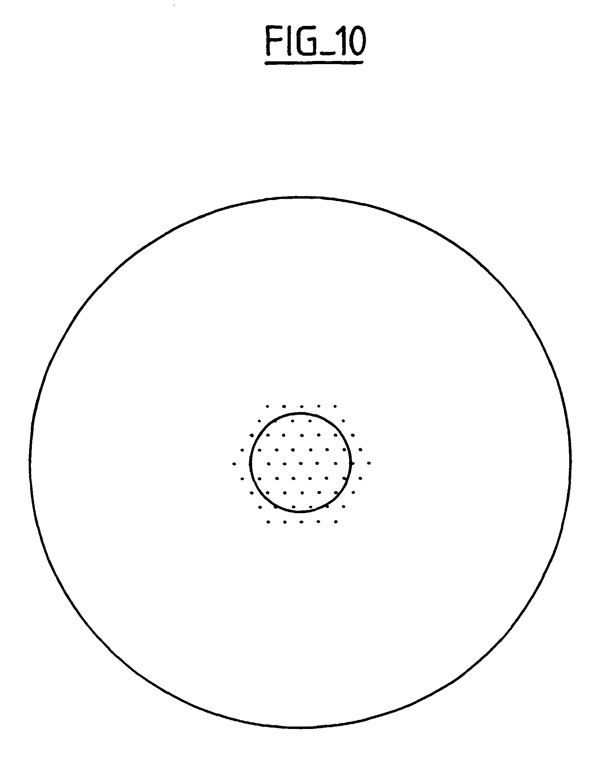

Les trous peuvent aussi s'étendre dans la première gaine, comme dans l'exemple de la figure 1 ou dans celui des figures 4 et 10. Dans ce cas, ils peuvent s'étendre assez largement dans la première gaine, comme dans l'exemple de la figure 1, ou encore simplement au voisinage du coeur monomode, comme dans le cas des figures 4 et 10. La variante de la figure 1 est notamment intéressante lorsque les trous situés le plus à l'extérieur ont un effet de confinement sur le signal, ou un effet supplémentaire de redirection de la lumière de pompe vers le coeur de fibre.

On peut aussi utiliser une distribution de trous similaire à celle qui est décrite dans la demande de brevet déposée le même jour et intitulée " Fibre optique photonique à forte surface effective " Dans ce cas, on appelle "couche" un sous-ensemble de la matrice de points, qui en section, respecte autant que possible une symétrie par rotation autour du centre de la fibre. Des couches successives sont concentriques, avec comme centre commun le centre de la fibre. Dans l'exemple d'une matrice triangulaire, une couche est typiquement formée d'un ensemble de trous disposés sur les sommets et le cas échéant les côtés d'un hexagone; la première couche présente six points disposés sur les sommets d'un hexagone dont le centre est le centre de la fibre; dans l'exemple donné dans cette demande, sont prévus des trous pour l'ensemble des points de cette couche. La deuxième couche est formée de douze points, disposés sur les sommets et au milieu des côtés d'un hexagone régulier; la longueur d'un côté de cet hexagone est égale à deux fois la longueur du côté de l'hexagone formant la première couche; dans l'exemple de cette demande de brevet, des trous sont aussi prévus pour l'ensemble des points de cette couche. La troisième couche est formée de vingt-quatre points, répartis sur les sommets d'un hexagone, et au tiers et au deux tiers de chaque côté; il n'y a pas de trous sur la troisième couche. On peut de la même façon définir les couches suivantes. Dans l'exemple de cette demande, chaque couche est invariante par rotation d'angle 60° autour du centre de la fibre; chaque couche constitue donc une approximation d'un cercle, en utilisant les points possibles de la matrice. Cette définition d'une "couche" se généralise à d'autres types de matrices. Ainsi, pour une matrice carrée, une couche pourrait être formée d'un ensemble de points disposés sur les arêtes d'un carré ou d'un octogone; une couche serait alors invariante par rotation d'angle 90° autour du centre de la fibre. Le document W.J. Wadsworth et autres cité plus haut présente deux "périodes" de trous entourant le centre de la fibre; chaque "période" est circulaire.

Il est alors possible de prévoir que les trous sont répartis ainsi :
- les trous de la fibre sont disposés sur au moins deux couches concentriques de points de la matrice centrées sur le centre de la fibre;
- les trous de la fibre disposés sur une couche ont une même dimension et occupent l'ensemble des points de la couche;
- les trous de la fibre disposés sur au moins une couche présentent une dimension différente de la dimension des trous de la fibre disposés sur au moins une autre couche.

Autrement dit, les trous de la fibre présentent autant que possible une symétrie radiale, compte tenu des contraintes géométriques imposées par la matrice de points; ceci assurer que la polarisation du signal n'est pas ou peu perturbée par la présence des trous dans la fibre.

Toutefois, suivant un rayon de la fibre, les trous présentent des dimensions variables. On peut prévoir au moins une couche sans trous; cette couche a pour effet de permettre au champ de s'étaler dans la fibre et ainsi d'augmenter sa surface effective et donc d'augmenter son diamètre de mode. On peut aussi imposer que les trous présentent radialement une dimension croissante : autrement dit, les trous d'une couche sont d'une dimension plus importante que les trous disposés sur une couche plus intérieure. Cette augmentation radiale des dimensions des trous permet d'améliorer l'effet de confinement de la lumière à l'intérieur de la fibre; en effet, qualitativement, des trous de dimension plus importante correspondent à une baisse plus importante de l'indice moyen, et on peut considérer qu'une couche de trou forme une sorte de saut d'indice, avec une variation d'indice d'autant plus importante de la dimension des trous varie.

Inversement, on pourrait aussi prévoir des trous de dimension plus importante au voisinage du centre de la fibre, puis des trous de dimension plus faible, et enfin des trous de dimension plus importante sur l'extérieur de l'ensemble de trous. Qualitativement, il apparaît que le champ a tendance à se concentrer dans les zones présentant les trous ayant les dimensions la plus faible. Les trous au centre on pour effet d'écarter le champ du signal vers la première gaine; les trous à l'extérieur ont au contraire un effet qualitatif de confinement.

En conclusion, la distribution des trous dans le coeur et le cas échéant la première gaine peut varier. On peut utiliser les exemples proposées dans les figures de la présente demande, comme l'exemple proposé dans la figure de la demande déposée conjointement, qui est décrit dans les paragraphes qui précèdent.

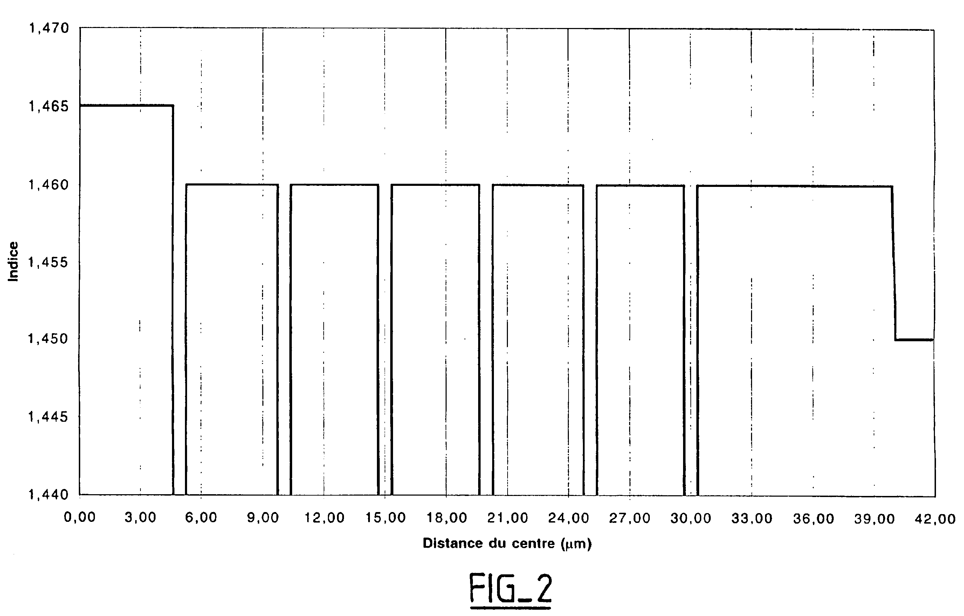

Du point de vue des dimensions, les trous de la fibre de la figure 1 sont circulaires et présentent un diamètre de 0,5 µm; la distance entre les trous dans la matrice est de 5 µm; la distribution de trous de la figure 1 présente six couches, chaque couche ayant la forme d'un hexagone. La figure 2 montre le profil d'indice de la fibre de la figure 1; de façon classique, on a porté en abscisse la distance au centre de la fibre, et en ordonnées l'indice du matériau composant la fibre; on notera que le graphe de la figure 2 représente l'indice sur un rayon de la fibre, qui passe par un sommet de l'hexagone régulier que forment les trous. On voit donc sur la figure non seulement l'indice du matériau, mais le lieu des trous, qui est matérialisé par un indice d'une valeur de 1. Compte tenu de l'échelle de la figure suivant l'axe des ordonnées, on n'a représenté qu'une partie de la courbe, et les indices voisins de 1 n'apparaissent pas sur la figure. La figure ne montre donc pas l'indice moyen de la fibre. La figure 2 montre que le coeur de fibre s'étend sur un rayon r₁ de 5 µm et présente une différence d'indice Δn₁ de 5.10⁻³ par rapport à l'indice de la première gaine. La première gaine s'étend entre les rayons r₁ et r₂, avec r₂ valant 40 µm; elle présente une différence d'indice Δn₁ de 10.10⁻³ par rapport à l'indice de la deuxième gaine. Cette dernière s'étend au-delà de ce rayon r₂; il peut par exemple s'agir de silice non-dopée. La figure montre aussi les chutes de l'indice correspondant aux trous, à des rayons de 5, 10, 15, 20 et 25 µm.

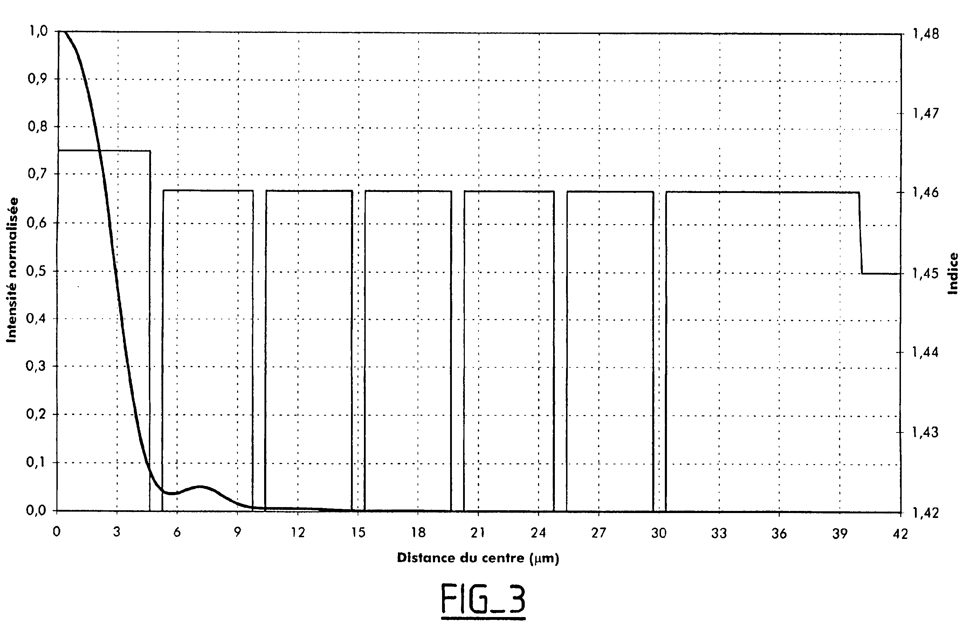

La figure 3 montre une représentation de l'intensité du signal sur un rayon de la fibre de la figure 1; on a porté en abscisse le rayon, comme à la figure 2, et en ordonnées la proportion de l'intensité du signal, par rapport à l'intensité maximale du signal. On a aussi porté à la figure 3 le profil d'indice, les indices étant indiqués en ordonnées sur la droite de la figure. On constate sur la figure que l'intensité du signal garde des valeurs importantes, bien au-delà du diamètre du coeur de la fibre; dans l'exemple, le diamètre de mode est de 11,5 µm (diamètre de mode à 1/e, calculé de façon connue en soi pour une approximation gaussienne de l'intensité). Dans ce cas, 78% de l'énergie se trouve à l'intérieur du cercle ayant comme diamètre ce diamètre de mode; 85% de l'énergie se trouve dans un cercle de diamètre 14 µm; 90% de l'énergie se trouve dans un cercle de diamètre 16 µm et 95% de l'énergie se trouve dans un cercle de diamètre 21 µm.

A titre de comparaison, on pourrait aussi prévoir avec la même distribution de trous un profil d'indice vérifiant:
- r₁ = 5 µm;
- Δn₁ = 4,5.10⁻³;
- r₂ = 25 µm;
- Δn₂ = 30.10⁻³;
Dans un tel cas, on aurait typiquement un diamètre de mode de l'ordre de 11,5 µm et un recouvrement voisin de 5%.

A titre de comparaison encore, une fibre présentant une distribution des trous du genre de celle proposée dans la demande déposée le même jour aurait un diamètre de mode de l'ordre de 20 µm, pour un même profil de l'indice du matériau.

Pour l'exemple de la figure 1, le dopant utilisé est de l'erbium, en une proportion voisine de 1000 ppm. Comme expliqué plus haut, on peut utiliser un dopage à l'intérieur d'un cercle de diamètre voisin du diamètre de mode - dans l'exemple 11,5 µm. On pourrait aussi utiliser un dopage en couronne, dans l'exemple entre 9 et 16 µm; la borne inférieure est légèrement inférieure au diamètre du coeur monomode, tandis que la borne supérieure correspond au diamètre du cercle dans lequel on retrouve 90% de l'énergie.

L'invention permet d'améliorer le recouvrement, par rapport à une fibre à double gaine ne présentant pas de trou. A titre de comparaison, une fibre à double gaine avec une gaine circulaire peut présenter un recouvrement de l'ordre de 1% pour un diamètre de coeur monomode de 8 µm et une première gaine circulaire d'un diamètre de 100 µm. Toutes choses égales par ailleurs, la présence de trous comme proposé dans les exemples de cette demande augmente le recouvrement, qui peut atteindre des valeurs de l'ordre de 1,3%. La présence de trous assure une augmentation de près de 30% du recouvrement.

Pour une fibre avec une première gaine conformée en pétales de rose, le recouvrement est typiquement de l'ordre de 3%. La présence des trous comme proposé dans les exemples permet de passer à des valeurs voisines de 4%, soit encore une fois une augmentation voisine de 30%. Cette augmentation se traduit par une augmentation correspondante du rendement d'amplification ou de l'effet laser.

La fibre de la figure 1 peut être utilisée dans tous les montages d'amplification ou de laser connus en soi; il est possible d'utiliser un pompage co-directionnel ou contra-directionnel, ou les deux.

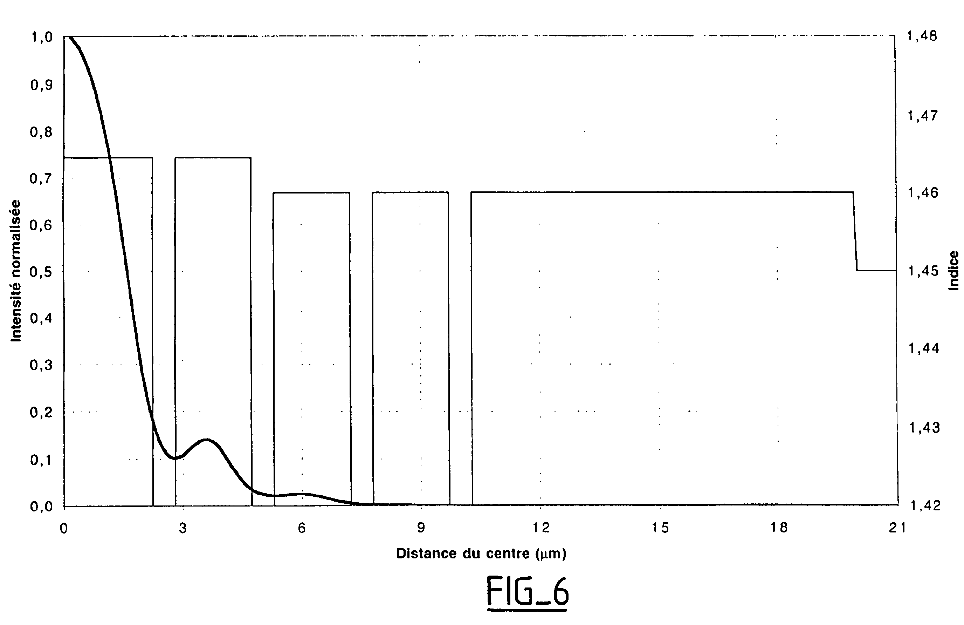

Les figures 4 à 6 sont des figures similaires aux figures 1 à 3, pour une autre fibre. Dans l'exemple de la figure 4, les trous sont distribués à l'intérieur du coeur monomode et sur la partie de la première gaine voisine de ce coeur monomode. Les trous présente un diamètre de 0,5 µm et sont séparés d'une distance de 2,5 µm. Le profil est similaire à celui de la figure 1, avec r₁ = 5 µm, Δn₁ = 4,5.10⁻³, r₂ = 20 µm et Δn₂ = 10.10⁻³.

Les caractéristiques de propagation de la fibre de la figure 4 sont les suivantes; la fibre présente à 1550 nm une dispersion chromatique de 3,41 ps/(nm.km), et une pente de dispersion chromatique de 0,10 ps/(nm².km). Elle présente à cette même longueur d'onde une surface effective de 55, 4 µm².

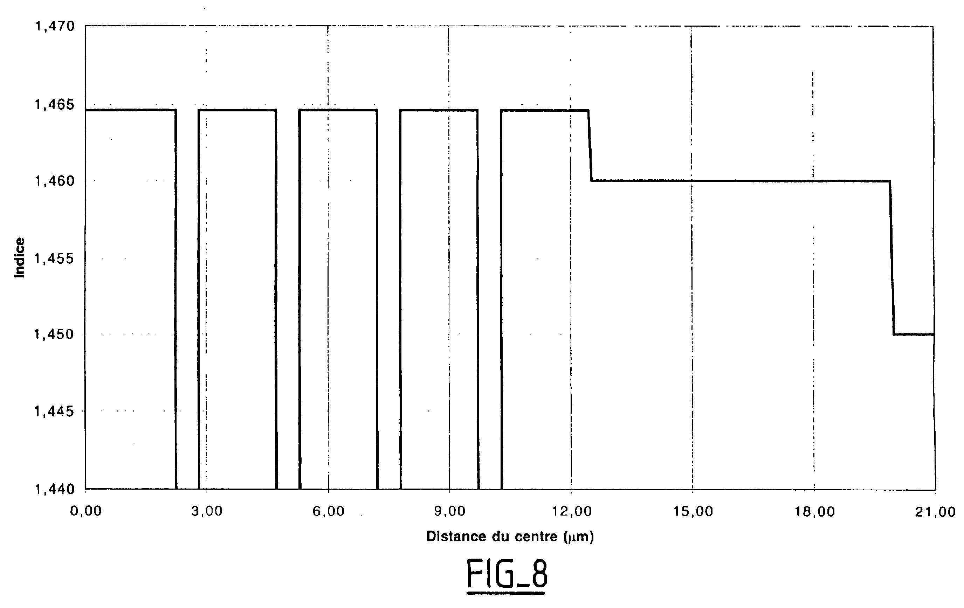

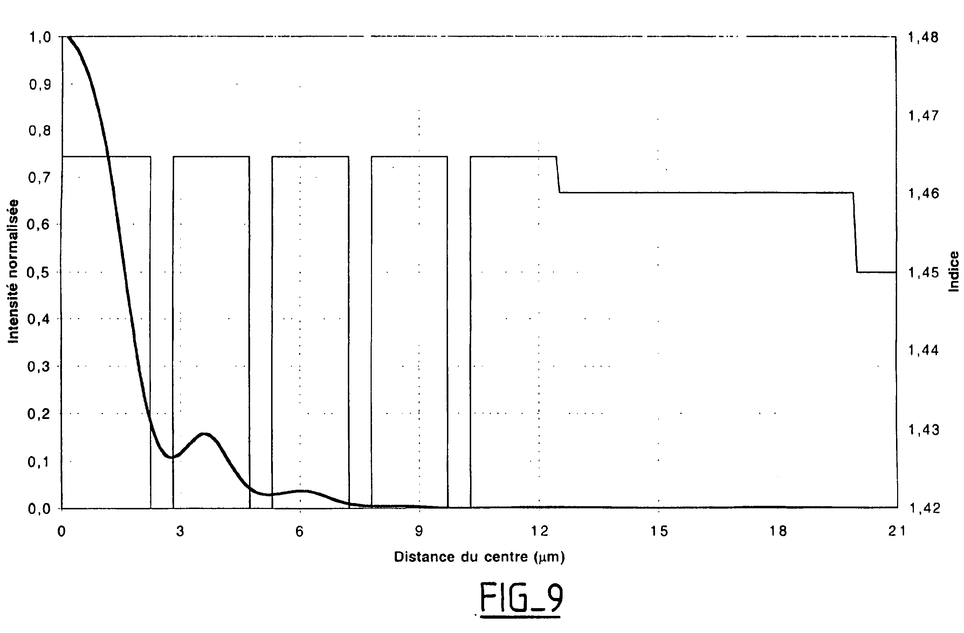

Les figures 7 à 9 sont des figures similaires aux figures 1 à 3, pour une autre fibre. Dans l'exemple de la figure 7, les trous sont uniquement distribués à l'intérieur du coeur de fibre, suivant une distribution analogue à celle de la figure 1. Le coeur de fibre présente un rayon r₁ de 12,5 µm, une différence d'indice Δn₁ de 4,5.10⁻³ par rapport à l'indice de la première gaine; la première gaine s'étend jusqu'à un rayon r₂ de 20 µm et présente une différence d'indice Δn₂ de 10.10⁻³ par rapport à l'indice de la deuxième gaine. Dans cet exemple, le diamètre de mode du signal est de 9 µm, et est supérieur au diamètre de mode de la fibre de la figure 4.

Les caractéristiques de propagation de la fibre de la figure 7 sont les suivantes : la fibre présente à 1550 nm une dispersion chromatique de 8,50 ps/(nm.km), et une pente de dispersion chromatique de -2,8 ps/(nm².km). Elle présente à cette même longueur d'onde une surface effective de 63,5 µm².

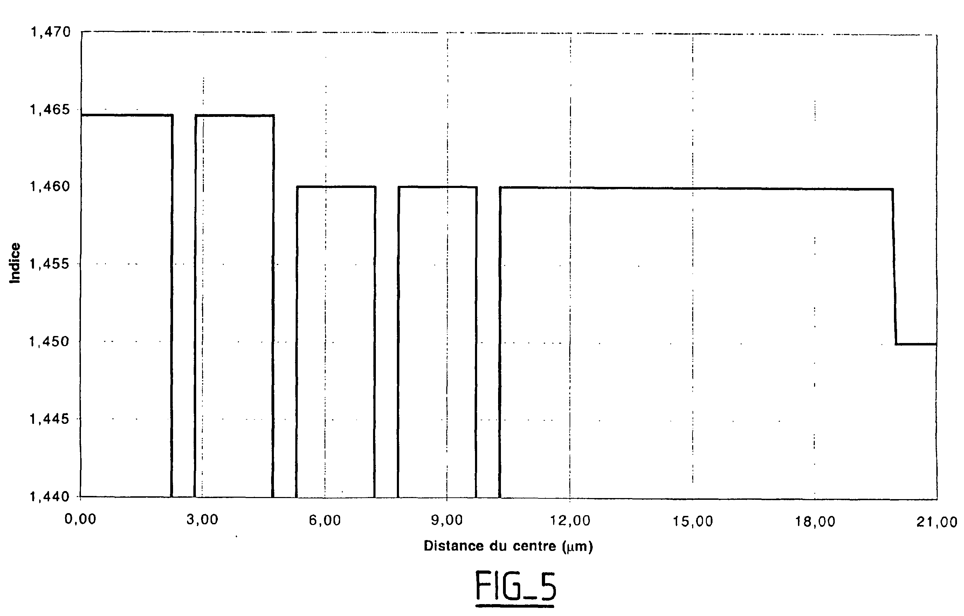

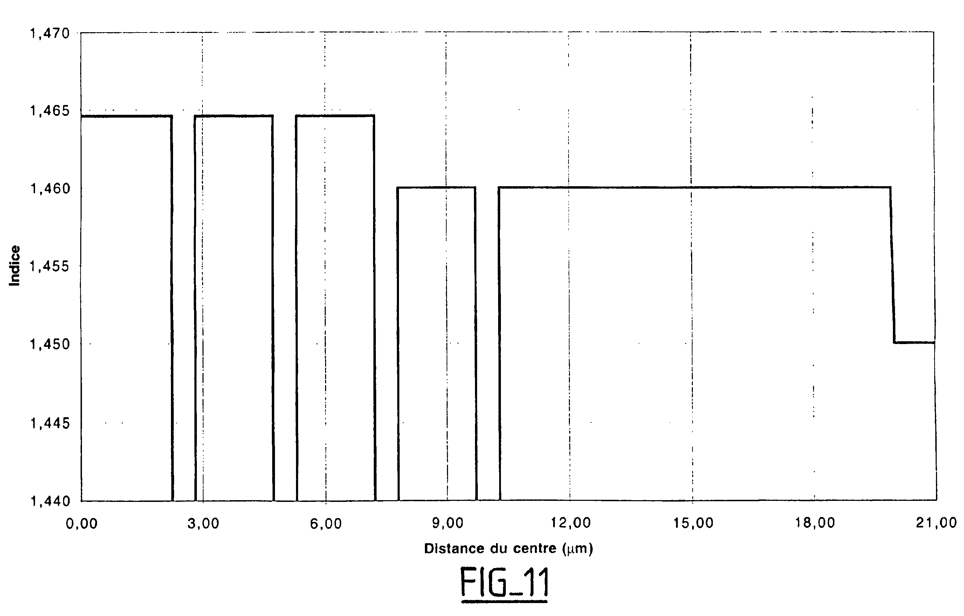

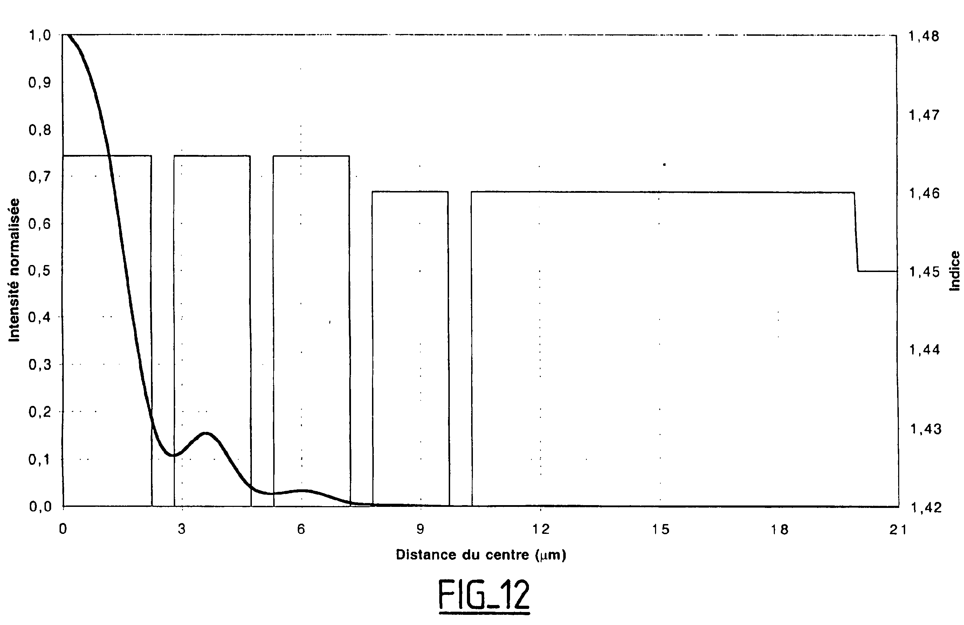

Les figures 10 à 12 sont des figures similaires aux figures 1 à 3, pour une troisième fibre. Dans l'exemple de la figure 10, les trous sont distribués comme sur la figure 1, mais le rayon de coeur est plus important; les trous sont toutefois distribués, comme sur la figure 1 dans le coeur et dans la gaine. Le profil d'indice de la figure 11 diffère de celui de la figure 5 en ce que le coeur de fibre présente un rayon r₁ de 7,5 µm. Dans cet exemple, le diamètre de mode du signal est encore de 9 µm

Les caractéristiques de propagation de la fibre de la figure 10 sont les suivantes : la fibre présente à 1550 nm une dispersion chromatique de 5,0 ps/(nm.km), et une pente de dispersion chromatique de -0,11 ps/(nm².km). Elle présente à cette même longueur d'onde une surface effective de 61,1 µm².

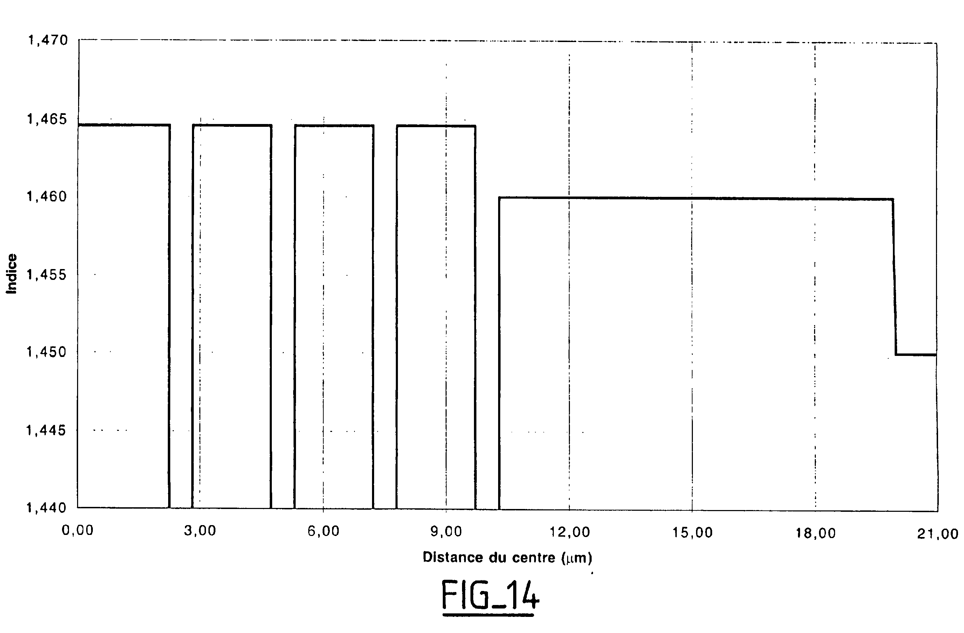

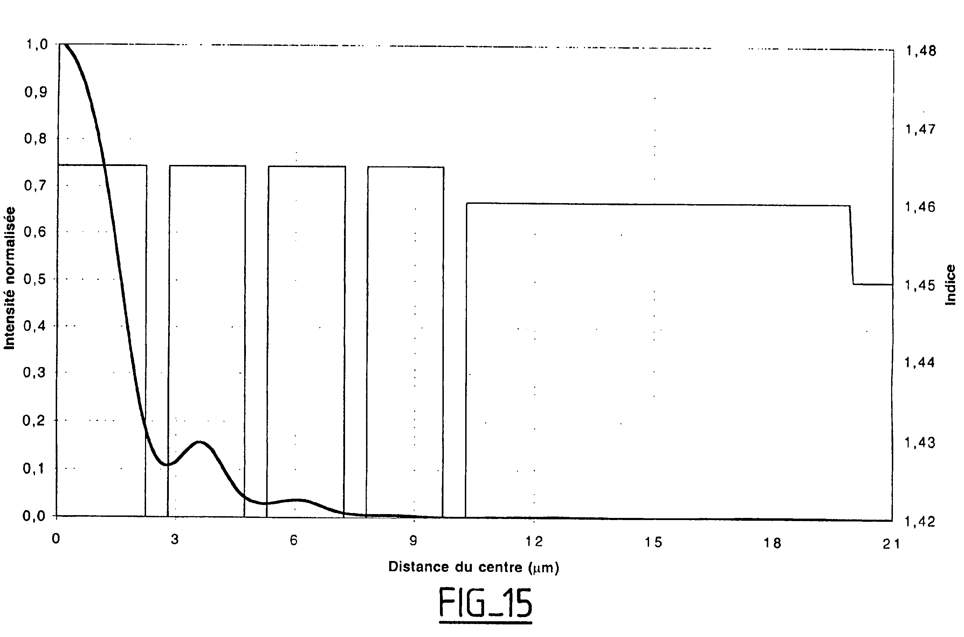

Les figures 13 à 15 sont des figures similaires aux figures 1 à 3, pour une quatrième fibre. Dans l'exemple de la figure 13, les trous sont distribués comme sur la figure 4, mais le rayon de coeur est plus important; les trous sont distribués dans tout le coeur de fibre, sans toutefois s'étendre dans la première gaine. Le profil d'indice de la figure 14 diffère de celui de la figure 5 en ce que le coeur de fibre présente un rayon r₁ de 10 µm. Dans cet exemple, le diamètre de mode du signal est de 9 µm.

Les caractéristiques de propagation de la fibre de la figure 13 sont les suivantes : la fibre présente à 1550 nm une dispersion chromatique de 5,79 ps/(nm.km), et une pente de dispersion chromatique de 0,11 ps/(nm².km). Elle présente à cette même longueur d'onde une surface effective de 63,4 µm².

Les fibres décrites plus haut sont d'une utilisation avantageuse comme fibres d'amplification dans des amplificateurs optiques. Par rapport aux fibres à double gaine classiques, elles présentent un meilleur recouvrement du signal et de la pompe, et assurent un meilleur rendement d'amplification. Typiquement, le rendement d'amplification dans une fibre comme celles qui sont décrites est de 30% supérieur au rendement d'amplification dans une fibre correspondante de l'état de la technique.

Bien entendu, des variations sont possibles par rapport aux exemples donnés plus haut; ainsi, les trous des différentes fibres sont circulaires: on pourrait aussi utiliser des trous d'une autre forme. On pourrait utiliser pour la deuxième gaine un matériau dopé au lieu de silice, ce qui décalerait l'ensemble du profil d'indice. On pourrait aussi combiner les exemples ci-dessus avec des solutions de l'état de la technique, comme par exemple une première gaine conformée en pétale ou suivant d'autres motifs, pour renvoyer de la lumière de pompe vers le coeur de la fibre. La gaine extérieure n'a que peu d'incidence sur le fonctionnement des fibres données en exemple; elle peut varier en indice comme en taille.

## Revendications

1. Une fibre optique à cristal photonique à double gaine (2), présentant
- un coeur de fibre (4), une première gaine (6) entourant le coeur de fibre et une deuxième gaine (8) entourant la première gaine,
- ou moins un trou (10) dans le coeur de fibre s'étendant longitudinalement le long de la fibre, et
- un dopage avec use ion de terre rare, au moins dans le coeur de la fibre.

2. La fibre de la revendication 1, **caractérisée en ce qu'**elle présente une pluralité de trous dans le coeur et dans la première gaine.

3. La fibre de la revendication 1 ou 2, **caractérisée en ce que** le diamètre de mode d'un signal injecté dans le coeur de fibre est supérieur au diamètre du coeur.

4. La fibre de la revendication 1, 2 ou 3, **caractérisée en ce que** le dopage s'étend dans un disque.

5. La fibre de la revendication 1, 2 ou 3, **caractérisée en ce que** le dopage s'étend dans une couronne.

6. La fibre de la revendication 5, **caractérisée en ce que** la couronne recouvre l'interface entre le coeur de fibre et la première gaine.

7. La fibre de l'une des revendications 1 à 6, **caractérisée en ce que** les trous sont disposés sur une matrice de points triangulaire.

8. La fibre de la revendication 7, **caractérisée en ce qu'**elle ne présente pas de trou en son axe.

9. La fibre de l'une des revendications 1 à 8, **caractérisée en ce que** les trous présentent une dimension croissante en s'éloignant de l'axe de la fibre.

10. Un amplificateur comprenant une fibre selon l'une des revendications 1 à 9.

11. Un laser à fibre comprenant une fibre selon l'une des revendications 1 à 9.

## Claims

1. A double-clad photonic crystal optical fiber (2), having
- a fiber core (4), a first cladding (6) surrounding the fiber core and a second cladding (8) surrounding the first cladding,
- at least one hole (10) in the fiber core, longitudinally expending along the length of the fiber, and
- doping with a rare-earth ion, at least within the core of the fiber.

2. The fiber of claim 1, **characterized in that** it has a plurality of holes within the core and within the first cladding.

3. The fiber of claim 1 or 2, **characterized in that** the mode diameter of a signal injected into the fiber core is greater than the diameter of the core.

4. The fiber of claim 1, 2, or 3, **characterized in that** the doping extends in a disk.

5. The fiber of claim 1, 2, or 3, **characterized in that** the doping extends in a ring.

6. The fiber of claim 5, **characterized in that** the ring covers the interface between the fiber core and the first cladding.

7. The fiber of one of the claims 1 to 6, **characterized in that** the holes are disposed in a triangular matrix of points.

8. The fiber of claim 7, **characterized in that** it does not present any hole on its axis.

9. The fiber of claims 1 to 8, **characterized in that** the holes are of size that increases with increasing distance from the axis of the fiber.

10. An amplifier comprising a fiber according to one of the claims 1 to 9.

11. A fiber laser comprising a fiber according to one of the claims 1 to 9.

## Patentansprüche

1. Eine photonische optische Faser mit doppeltern Mantel (2), aufweisend:
- Einen Faserkern (4), einen ersten Mantel (6), welcher den Faserkern umhüllt, und einen zweiten Mantel (8), welcher den ersten Mantel umhüllt,
- mindestens ein Loch (10) im Faserkern, welches sich in Längsrichtung entlang der Faser erstreckt, und
- eine Dotierung mit einem Seltene-Erden-lon, zumindest im Faserkern.

2. Die Faser nach Anspruch 1, **dadurch gekennzeichnet, dass** sie eine Vielzahl von Löchern im Kern und im ersten Mantel aufweist.

3. Die Faser nach Anspruch 1 oder 2, **dadurch gekennzeichnet, dass** der Modendurchmesser eines in den Faserkern eingespeisten Signals größer ist als der Durchmesser des Kerns.

4. Die Faser nach Anspruch 1, 2 oder 3, **dadurch gekennzeichnet, dass** sich die Dotierung bis in eine Scheibe erstreckt.

5. Die Faser nach Anspruch 1, 2 oder 3, **dadurch gekennzeichnet, dass** sich die Dotierung bis in einen Kranz erstreckt.

6. Die Faser nach Anspruch 5, **dadurch gekennzeichnet, dass** der Kranz die Schnittstelle zwischen dem Faserkern und dem ersten Mantel abdeckt.

7. Die Faser nach einem der Ansprüche 1 bis 6, **dadurch gekennzeichnet, dass** die Löcher auf einer dreieckigen Punktmatrix angeordnet sind.

8. Die Faser nach Anspruch 7, **dadurch gekennzeichnet, dass** sie in ihrer Achse kein Loch aufweist.

9. Die Faser nach einem der Ansprüche 1 bis 8, **dadurch gekennzeichnet, dass** die Löcher ansteigend Abmessungen aufweisen, je weiter sie von der Achse der Faser entfernt sind.

10. Ein Verstärker, welcher eine Faser nach einem der Ansprüche 1 bis 9 umfasst.

11. Ein Faserlaser, welcher eine Faser nach einem der Ansprüche 1 bis 9 umfasst.
